# EUROPÄISCHE PATENTSCHRIFT

(11) **EP 4 339 517 B1**
(45) Veröffentlichungstag und Bekanntmachung des Hinweises auf die Patenterteilung: **10.12.2025**
(21) Anmeldenummer: 23179293.8
(22) Anmeldetag: 14.06.2023
(51) Int. Cl.: F24C 15/00, F25D 27/00, F21V 8/00, F21V 33/00, H05B 6/64, F21W 131/307

(54) **GARGERÄTELEUCHTE**
COOKING APPLIANCE LAMP
LAMPE POUR APPAREILS MÉNAGERS

(30) Priorität: 19.09.2022 DE 102022123917
(43) Veröffentlichungstag der Anmeldung: 20.03.2024
(60) Teilanmeldung: 25150833.9
(73) Patentinhaber: BJB GmbH & Co. KG, 59755 Arnsberg (DE)
(72) Erfinder: Henrici, Philipp, 59755 Arnsberg (DE); Baumeister, Olaf, 59846 Sundern (DE); Harnischmacher, Jörg, 58706 Menden (DE)
(74) Vertreter: Ostriga PartGmbB

(56) Entgegenhaltungen:
- EP-A1- 2 366 323
- EP-A1- 2 913 591
- EP-A1- 3 388 747
- EP-A1- 4 033 861
- DE-U1- 202015 104 575

## Beschreibung

Die Erfindung betrifft eine Gargeräteleuchte, mit einer Lichtquelle, die von einer Leiterplatte mit darauf angeordneter LED gebildet ist, mit einem Lichtleitstab, der eine Lichteintrittsfläche für das von der LED emittierte Licht aufweist, mit einem Halter, der auf einer Unterseite eine Leiterplattenaufnahme aufweist und auf einer der Unterseite gegenüberliegenden Oberseite mit einem Fixierelement zur Aufnahme des Lichtleitstabes versehen ist, mit einer Durchbrechung des Halters im Bereich des Fixierelementes, durch welche das emittierte Licht von der auf der Unterseite angeordneten LED zum im oberseitig angeordneten Lichtleitstab gelangt.

Eine gattungsgemäße Leuchte ist in der DE 20 2020 101 157 U1 der Anmelderin gezeigt. Dort wird ein Lichtleitstab in ein als Hülse ausgebildetes Fixierelement eingesetzt. Der Lichtleitstab verfügt an seinem Außenumfang über einen Freischnitt. In diesem Freischnitt greifen, je nach Ausführungsbeispiel unterschiedlich ausgebildete, Sicherungselemente ein und verankern so den Lichtleitstab am Halter. So schlägt die Veröffentlichung beispielsweise Federstecker oder Rastflügel vor, die als Sicherungselemente dienen. Auf diese Weise wird eine formschlüssige Festlegung des Lichtleitstabes innerhalb des Fixierelementes des Halters erreicht.

Die DE 10 2018 111 092 A1 zeigt eine ähnlich aufgebaute Leuchte, bei welcher der Lichtleitstab ebenfalls in einem hülsenförmigen Fixierelement einsitzt. Der Hülsenkörper ist jedoch geschlitzt ausgeführt, so dass seine Wände in Radialrichtung verformbar sind. Der Hülsenkörper ist von einem Klemmring umgeben, welcher die Hülsenwände gegen den Lichtleitstab presst. Auf diese Weise wird ein Reibschluss zwischen Hülsenwand und Lichtleitstab hergestellt, welcher den Lichtleitstab im Fixierelement zu halten in der Lage ist.

Die aus dem Stand der Technik bekannten Befestigungsmöglichkeiten für Lichtleitstäbe im Halter einer Gargeräteleuchte sind durchaus zufriedenstellend, auch wenn in bestimmten Einbausituationen die Formschlussverbindung der Reibschlussverbindung vorzuziehen ist.

In der EP 2 913 591 A1 ist ein Gargerät mit einer Leuchte dargestellt. Um eine spezifische Kühlfunktion der Leuchte zu ermöglichen, ist eine aus mehreren Einzelteilen bestehende Leuchtenhalterung entwickelt worden.

Die DE 20 2015 104 575 U1 zeigt eine einfach aufgebaute Haushaltsgeräteleuchte. Der dort vorgeschlagene Halter verrastet eine Leiterplatte und nimmt entgegen der Lichtaustrittsrichtung eines Leuchtmittels einen Lichtleitstab auf.

In EP 3 388 747 A1 ist ein Lichtleiter dargestellt, der eine Abdeckung für eine Öffnung einer Garraumwand integriert und in einem bestimmten Winkel zur Abdeckung ausgerichtet ist.

EP 4 033 861 A1 zeigt eine Gargeräteleuchte, bei welcher der Lichtleitstab mit einer Umfangsnut versehen ist. Von einem Ringkragen ausgebildete Rastlaschen greifen in die Umfangsnut ein, um den Lichtleitstab zu verankern.

Schließlich ist aus der gattungsfremden EP 2 366 323 A1 die Geräteleuchte eines Geschirrspülers bekannt. Bei dieser Wird ein Abdeckglas entgegen der Lichtaustrittrichtung eines Leuchtmittels im Halter montiert.

Hinsichtlich der Montagefreundlichkeit wird jedoch ein Verbesserungsbedarf gesehen. Daher ist es Aufgabe der Erfindung, eine gattungsgemäße Leuchte mit einer alternativen Lichtstabbefestigung bereitzustellen.

Gelöst wird die Aufgabe der Erfindung zunächst von einer Leuchte mit den Merkmalen des Anspruches 1.

Der wesentliche Vorteil der Erfindung liegt zunächst darin, dass der Lichtstab formschlüssig im Fixierelement des Halters festgelegt ist. auf diese Weise ist ein Herausrutschen des Lichtleitstabes aus dem Halter bei Transport oder Montage der Leuchte sicher ausgeschlossen. Der für die Formschlussverbindung genutzte Umfangsvorsprung, der sich in Radialrichtung von der Längsachse des Lichtleitstabes nach außen hin erstreckt, hat gegenüber den Formschlussverbindungen im Stand der Technik einen erheblichen Vorteil, was die Lichtverluste innerhalb des Lichtleitstabes anbelangt. Ein Umfangsfreischnitt, so er nicht unter Berücksichtigung des Lichtaustrittswinkels der LED und des Abstandes zur Lichtaustrittsebene der LED in den Lichtstab eingebracht ist, verringert den für die Lichtleitung zur Verfügung stehenden Querschnitt und fügt im Zweifelsfall Lichtaustrittsflächen in den Lichtleitstab ein. Über diese Lichtaustrittsflächen, die im Bereich des Fixierelementes des Halters angeordnet sind, tritt in den Lichtleitstab eingespeistes Licht aus, was zu einem gewissen Lichtverlust führt.

Die formschlüssige Festlegung des Lichtleitstabes durch einen Umfangsvorsprung gibt dem Konstrukteur einer gattungsgemäßen Leuchte somit größere Freiheiten, die mechanische Festlegung des Lichtleitstabes im Halter zu realisieren, ohne sich über eventuelle Lichtverluste durch aus dem Stand der Technik bekannte Umfangsfreischnitte Gedanken machen zu müssen oder ohne sich um das Einhalten bestimmter Abstände zwischen Lichtaustrittsebene der LED und Umfangsfreischnitt unter Berücksichtigung des Lichtaustrittswinkels der LED berücksichtigen zu müssen.

Der Umfangsvorsprung kann zusätzlich zur mechanischen Befestigung des Lichtleitstabes im Halter auch dazu genutzt werden, den Lichtleitstab in einer definierten Ausrichtung im Halter zu positionieren. Dies ist insbesondere dann möglich, wenn der Umfangsvorsprung lediglich entlang eines Teils einer Umfanglinie ausgebildet ist und das Fixierelement des Halters eine korrespondierende, den Umfangsvorsprung aufnehmende Ausnehmung aufweist. So ist gewährleistet, dass der Umfangsvorsprung in lediglich einer Relativausrichtung zum Halter in das Fixierelement eingesetzt und dort festgelegt werden kann.

Der längsaxiale Umfangsfreischnitt von wenigstens 180 Grad und das Einsetzen des Lichtleitstabes quer zur Längsachse der Zylinderwand in den Zylinderraum erlaubt es, den Lichtleitstab quer zur Lichtaustrittsrichtung in das Fixierelement einzusetzen. Diese Montage lässt sich besonders einfach und leicht bewerkstelligen und erlaubt insbesondere auch bei montierter Leuchte einen einfachen Einsatz des Lichtleitstabes im Schadensfall.

Bei einer besonders bevorzugten Ausführungsform ist jedoch vorgesehen, dass der Umfangsvorsprung ein im Wesentlichen umlaufender Flansch am der Lichteintrittsfläche des Lichtleitstabes gelegenen Ende des Lichtleitstabes ist.

Diese Ausführungsform hat den erheblichen Vorteil, dass der Lichtleitstab zumindest hinsichtlich seines als Flansch ausgebildeten Befestigungsorgans rotationssymmetrisch ausgebildet ist, was die Herstellung des Lichtleitstabes erheblich vereinfacht.

Die Anordnung des Flansches an demjenigen Ende des Lichtleitstabes, der die Lichteintrittsfläche ausbildet, vergrößert die Lichteintrittsfläche um das Maß der Flanschbreite. Auf diese Weise lässt sich bei entsprechender Ausgestaltung der LED mehr Licht in den Lichtleitstab einspeisen.

Insbesondere wenn der in Lichtaustrittsrichtung gelegene Übergang zwischen Flansch und Lichtleitstab optisch korrekt ausgeführt wird, ist eine Totalreflektion des Lichtes auch im Übergangsbereich gewährleistet, so dass ein Lichtaustritt im Übergangsbereich durch die vergrößerte Lichteinspeisefläche des Lichtleitstabes sicher vermieden wird.

Ein Flansch hat darüber hinaus den Vorteil, dass die Ausrichtung des Lichtleitstabes bei der Montage im Fixierelement des Halters aufgrund der Rotationssymmetrie unerheblich ist und die Montage wesentlich vereinfacht ist.

Es ist vorgesehen, dass das Fixierelement des Halters ein hohlzylindrisches Bauteil mit einer Zylinderwand ist, die in einer Radialebene eine innenumfängliche Ausnehmung, insbesondere eine wenigstens als Ringnutabschnitt ausgebildete Ausnehmung aufweist, in welcher der Umfangsvorsprung des Lichtleitstabes formschlüssig einsitzt, insbesondere wenn die innenumfängliche Ausnehmung, insbesondere in Form wenigstens eines Ringnutabschnittes an dem dem Halter nahen Ende der Zylinderwand ausgebildet ist.

Durch diese Erfindungsmerkmale ist sichergestellt, dass eine zum Umfangsvorsprung bzw. Flansch passende Komplementärstruktur im Fixierelement vorhanden ist. Diese nimmt den erfindungsgemäßen Erfindungsvorsprung, im Zweifel den Flansch, auf. Hierdurch wird in Lichtaustrittsrichtung eine zugfeste Formschlussverbindung geschaffen, die den Lichtleitstab sicher im Halter der Leuchte hält.

Sodann ist vorgesehen, dass ein Sicherungselement den Lichtleitstab in der Zylinderwand des Fixierelementes hält.

Das Sicherungselement ist dafür zuständig, den entlang einer Montagerichtung in das Fixierelement eingesetzten Lichtleitstab gegen eine entsprechende Gegenbewegung zu sichern und somit den Lichtleitstab im Fixierelement zu halten.

Hierbei ist vorgesehen, dass das Sicherungselement ein die Zylinderwand des Fixierelementes radial umfassender Sicherungsring, insbesondere ein Elastomerring ist, der bevorzugt in einer außenumfänglich in die Zylinderwand eingearbeiteten Sicherungsringnut einliegt.

Mit dem als Ring ausgebildeten Sicherungselement lässt sich der Lichtleitstab besonders einfach im Fixierelement gegen ein Herausrutschen quer zur Lichtaustrittsrichtung verankern. Dabei ist ein Elastomerring als Sicherungselement von der Erfindung bevorzugt, da sich dieser besonders einfach handhaben lässt. Als Sicherungsring kann jedoch auch ein geschlitztes Ringelement aus rückstellelastischem Material genutzt werden, welches sich beim Aufsetzen auf die Zylinderwand des Fixierelementes aufgrund des Schlitzes weiten kann und sich beim Erreichen der Sicherungsringnut rückstellt. als rückstellelastische Materialien eignen sich beispielsweise Metalle oder Kunststoffe. Der wesentliche Vorteil hier ist deren höhere Standzeit bei hohen Temperaturen. Diese sind regelmäßig bei Gargeräten, insbesondere bei pyrolysefähigen Backöfen im Hinblick auf die Lebensdauer der verwendeten Materialien zu berücksichtigen.

Ein alternativ ausgebildetes Fixierelement kennzeichnet sich dadurch, dass die Zylinderwand wenigstens einen rückstellelastischen, in den Umfangsfreischnitt vorspringenden Sicherungsflügel ausbildet, welcher als Sicherungselement den Umfangsfreischnitt in einer Radialebene verengt und außenumfänglich am Lichtleitstab anliegt.

Auch bei dieser Ausführungsform wird der Lichtleitstab quer zur Lichtaustrittsrichtung in das Fixierelement des Halters eingebracht. Dabei gleiten die Sicherungsflügel am Außenumfang des Lichtleiterstabes ab und werden gespreizt, um sich bei lagekorrektem Einsitzen des Lichtleitstabes im Fixierelement rückzustellen. Dabei umgreifen die Sicherungsflügel den Lichtleitstab und sichern ihn gegen ein Herausrutschen aus dem Fixierelement entgegen der Montagerichtung.

Der wesentliche Vorteil dieser Ausführungsform ist darin zu sehen, dass kein separates Sicherungselement erforderlich ist. Idealerweise sind die Sicherungsflügel materialeinheitlich-stoffschlüssiger Bestandteil der Zylinderwand. Dies lässt sich fertigungstechnisch einfach bewerkstelligen und erleichtert die Montage, da lediglich noch der Lichtleitstab einzusetzen ist, ohne dass ein separates Sicherungselement angesetzt werden muss.

Weitere Vorteile der Erfindung sowie ein besseres Verständnis derselben folgt aus der Beschreibung verschiedener Ausführungsbeispiele der Erfindung. Es zeigen:
- Figur 1: eine erste Ausführungsform der Erfindung in einer ersten Explosionsansicht,
- Figur 2: die Ausführungsform gemäß Figur 1 in einer zweiten Explosionsansicht,
- Figur 3: eine Ansicht von oben auf den Halter der Ausführungsform nach Figur 1,
- Figur 4a: eine Darstellung von Lichtleitstab und Halter der Ausführungsform nach Figur 1 in Vormontagestellung,
- Figur 4b: die Ansicht gemäß Figur 4a in einem Längsschnitt,
- Figur 5a: eine Ansicht von Lichtleitstab und Halter gemäß Ausführungsform nach Figur 1 in Montagestellung,
- Figur 5b: eine Schnittdarstellung der Figur 5a,
- Figur 6: ein erster Vertikalschnitt durch die Ausführungsform gemäß Figur 1,
- Figur 7: ein zweiter Vertikalschnitt durch die Ausführungsform gemäß Figur 1,
- Figur 8: eine Ausführungsform nicht gemäß der Erfindung in Explosionsdarstellung,
- Figur 9: eine Aufsicht auf den Halter der Ausführungsform nach Figur 8,
- Figur 10a: eine Darstellung von Halter und Lichtleitstab der Ausführungsform nach Figur 8 in Vormontagestellung,
- Figur 10b: die Darstellung nach Figur 10a im Längsschnitt,
- Figur 11a: die Darstellung von Halter und Lichtleitstab der Ausführungsform nach Figur 8 in Montagestellung,
- Figur 11b: die Darstellung nach Figur 11a in einem Vertikalschnitt,
- Figur 12: eine Ansicht von oben auf den Halter mit eingesetztem Lichtleitstab gemäß der Ausführungsform nach Figur 8,

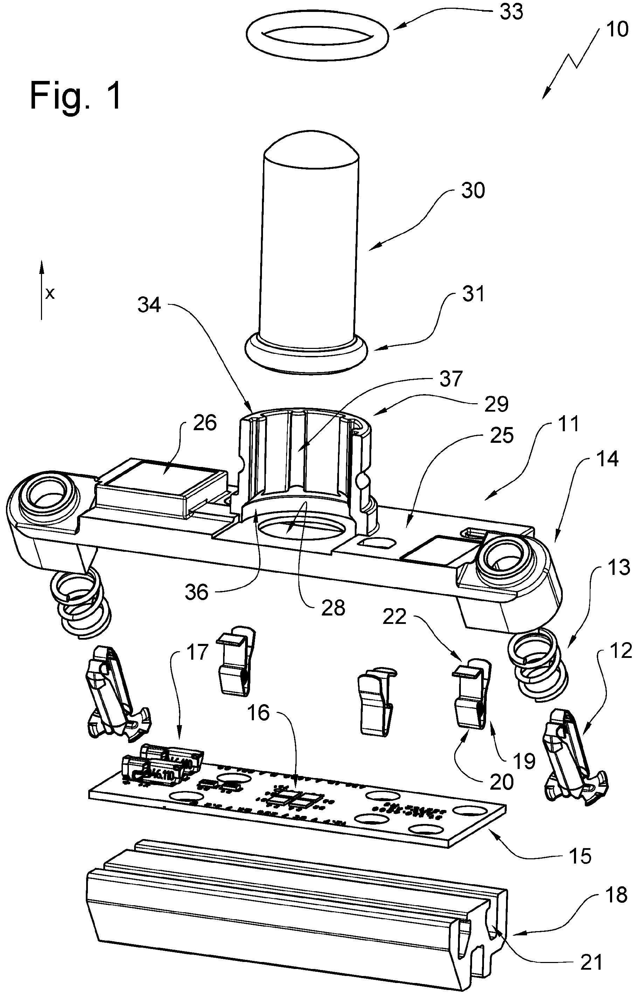

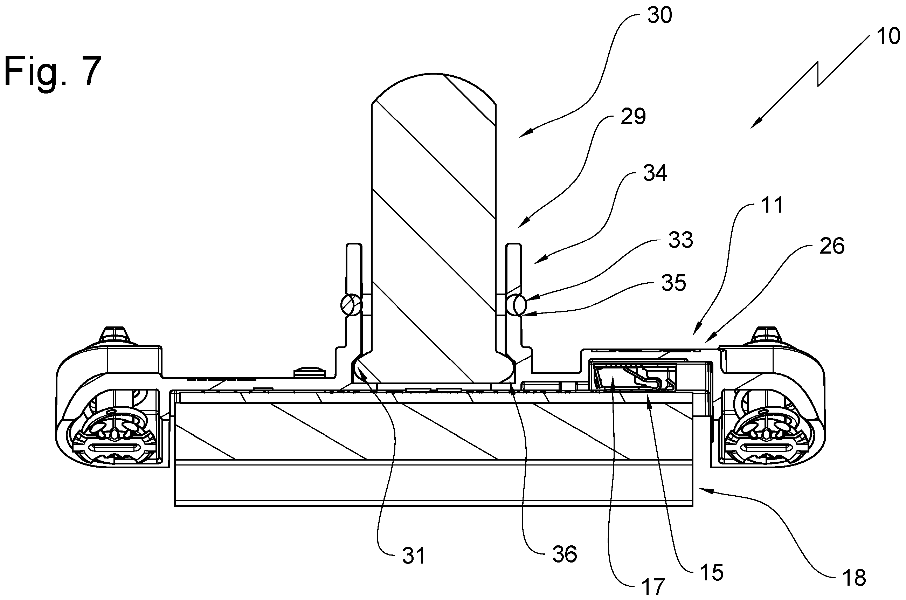

Im Folgenden wird die Erfindung anhand von zwei Ausführungsbeispielen, dargestellt in den Figuren 1 - 12, detailliert beschrieben.

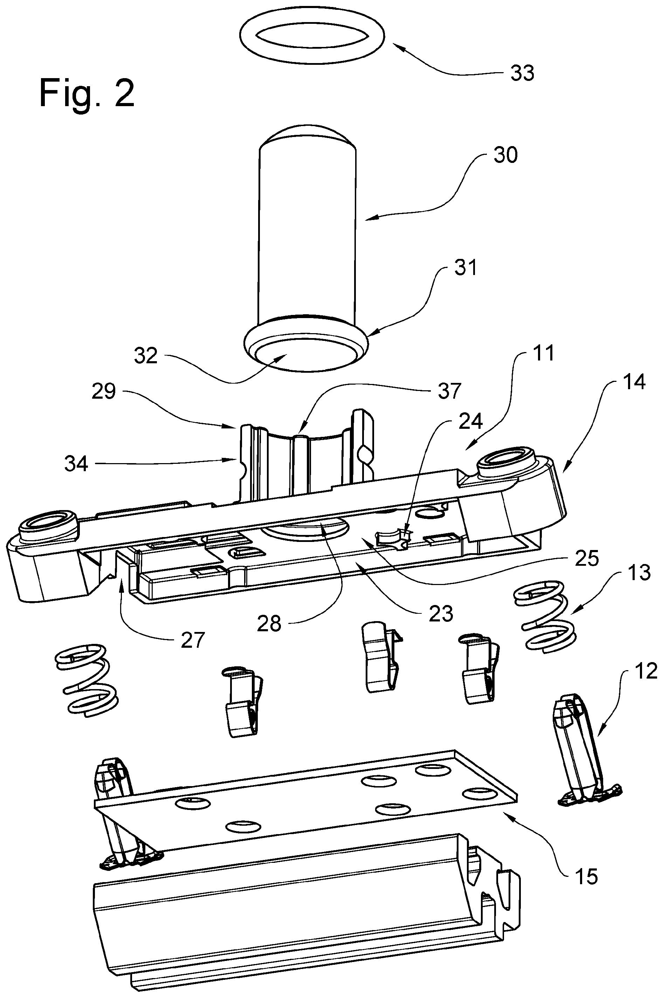

In den Figuren ist eine Leuchte gemäß der Erfindung insgesamt mit der Bezugsziffer 10 versehen. Eine erste Ausführungsform der erfindungsgemäßen Leuchte 10 ist in den Figuren 1 bis 8 dargestellt. Die allgemeine und für alle Ausführungsformen geltende Beschreibung ergibt sich im Wesentlichen aus den folgenden Ausführungen zu den Figuren 1 und 2.

Die Leuchte 10 umfasst zunächst einen Halter 11. Dieser dient dazu, alle Einzelteile der Leuchte 10 untereinander zu verbinden und zueinander auszurichten. Darüber hinaus dient der Halter 11 bei den Ausführungsformen der Erfindung auch dazu, die Leuchte 10 an einem nicht weiter dargestellten Stützteil eines Haushaltsgerätes, insbesondere eines Gargerätes, anzuordnen. Hierzu dienen Steckbolzen 12, die durch Schraubenfedern 13 hindurch in Bolzenaufnahmen 14 eingesteckt werden. Das nicht dargestellte Stützbauteil verfügt über Lochungen, durch die die Steckbolzen 12 hindurchschiebbar sind. Die Schraubenfedern 13 werden bei der Montage der Leuchte 10 am Stützbauteil mit einer Federvorspannung beaufschlagt. Die Federkräfte erlauben einerseits den Ausgleich von Maßtoleranzen und andererseits den Ausgleich von Materialausdehnungen durch Temperatureinflüsse insbesondere bei Gargeräten wie Backöfen. Sie gewährleisten also einen sicheren und rüttelfreien Sitz der Leuchte 10 an einem Stützbauteil eines Gerätes.

Eine Leiterplatte 15 verfügt über wenigstens eine LED 16, welche als Lichtquelle dient und aus welcher Licht in Lichtaustrittsrichtung X emittiert wird. Anschlussklemmen 17, welche auf der Leiterplatte 15 aufgelötet sind, dienen der elektrischen Anbindung der Leiterplatte 15 an eine Energiequelle über einsteckbare, nicht dargestellte Anschlussleiter.

Die Leiterplatte 15 wird auf einem Gegenlager 18, insbesondere ausgebildet als Kühlkörper, aufgesetzt. Hierzu dienen Rastfederelemente 19, deren Fuß 20 in einer Befestigungsnut 21 des Gegenlagers einsitzt und deren Haltearme 22 auf der dem Gegenlager 18 abgewandten Oberseite der Leiterplatte 15 aufliegen und diese gegen das Gegenlager drücken.

Der Halter 11 bildet auf seiner dem Gegenlager 18 zugewandten Unterseite eine Leiterplattenaufnahme 23 aus (siehe insbesondere Figur 2). Diese kann mit zum Gegenlager 18 vorspringen Distanzstücken 24 versehen sein. Diese schaffen einen Raum zwischen der Deckwand 25 des Halters 11 und der Platinen Oberfläche, der für auf der Platine aufsitzende Elektronikbauteile, wie die LED 16 oder Steuerchips nutzbar ist. Darüber hinaus kann durch den so entstehenden Luftraum ein Kühlluftstrom geführt werden, um eine für den LED-Betrieb zweckmäßige Wärmeabfuhr zu gewährleisten.

Die als Distanzstücke 24 bezeichneten Dorne könnten auch als Lagerkodierung für die Leiterplatte 15 dienen. Hierzu greifen die Dorne in korrespondierende Ausnehmungen der Leiterplatte 15 ein.

Für die Anschlussklemmen 17 bildet die Deckwand 25 des Halters 13 eine Aufnahmekuppel 26 aus, die seitlich nach außen hin mit einem Leitereinführdurchbruch 27 versehen ist.

Der Halter 11 verfügt in seiner Deckwand 25 über eine Durchbrechung 28, die in Lichtaustrittsrichtung X oberhalb der LED 16 liegt. Das von der LED emittierte Licht tritt durch die Durchbrechung 28 der Deckwand 25 aus dem Halter 11 aus.

Zentraler Bestandteil des Halters 11 ist ein hohlzylindrisches bis hülsenartiges Fixierelement 29, welches einen Lichtleitstab 30 formschlüssig am Halter 11 anordnet. Die vier beschriebenen Ausführungsformen unterscheiden sich im Wesentlichen durch die Ausgestaltung dieses Fixierelementes 29, auf welches später detailliert eingegangen wird.

Der Lichtleitstab 30 ist ein zylindrisches Bauteil und im Ausführungsbeispiel kreiszylindrisch ausgeführt. Abweichende Querschnittsformen sind jedoch in jeder Hinsicht möglich, ohne hierdurch die Erfindungsprinzipien zu verlassen.

Der Lichtleitstab 30 ist mit einem Umfangsvorsprung versehen. Das heißt, das Lichtleitstabmaterial ist in Radialrichtung von der Längsachse des Lichtleitstabes 30 wegweisend aus der Umfangsfläche ausgestellt. In den Ausführungsformen ist dieser Umfangsvorsprung grundsätzlich als ein umlaufender Flansch 31 dargestellt, der sich am der Leiterplatte 15 naheliegenden Ende des Lichtleitstabes 30 befindet. Anders ausgedrückt befindet sich der Flansch 31 an demjenigen Ende des Lichtleitstabes 30, welcher eine Lichteintrittsfläche 32 des Lichtleitstabes bildet.

Zur Sicherung des Lichtleitstabes 30 in Fixierelement 29 der ersten Ausführungsform der Erfindung gemäß den Figuren 1 bis 8 ist noch ein Sicherungsring 33 vorgesehen, dessen Funktion ebenfalls im Folgenden beschrieben wird.

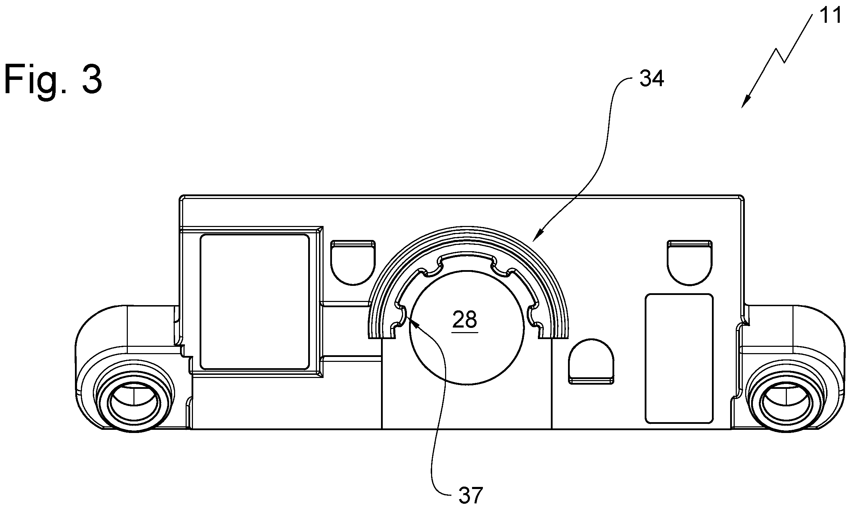

Wie in Zusammenschau der Figuren 1 bis 3 zur ersten Ausführungsform ersichtlich ist, verfügt das hohlzylindrische Fixierelement 29 der ersten Ausführungsform über eine den Hohlzylinder bildende Zylinderwand 34. Diese verfügt in ihrer Außenoberfläche über eine Sicherungsringnut 35. Die Zylinderwand 34 entspringt der Deckwand 25 des Halters 11 in Lichtaustrittsrichtung X und umgibt die Durchbrechung 28. Die Innenumfangsfläche der Zylinderwand 34 verfügt an ihrem der Deckwand 25 nahen Ende über einen Ringnutabschnitt 36, der sich vollständig entlang des Innenumfangs der Zylinderwand 34 erstreckt. Die Figuren 1 und 2, insbesondere aber auch die Aufsicht auf den Halter gemäß Figur 3 zeigt, dass die Zylinderwand 34 sich lediglich über einen Umfangswinkel von 180° um die Durchbrechung 28 herum erstreckt. Das hohlzylindrische Fixierelement 29 gemäß der ersten Ausführungsform der Erfindung ist also nach Art eines vertikal geschnittenen Halbzylinders ausgebildet. Darüber hinaus ist den Zeichnungen zu entnehmen, dass die Innenumfangsfläche der Zylinderwand mit Zentrierstegen 37 versehen ist, um den Lichtleitstab in Vertikalrichtung zentriert in Fixierelement 29 zu halten.

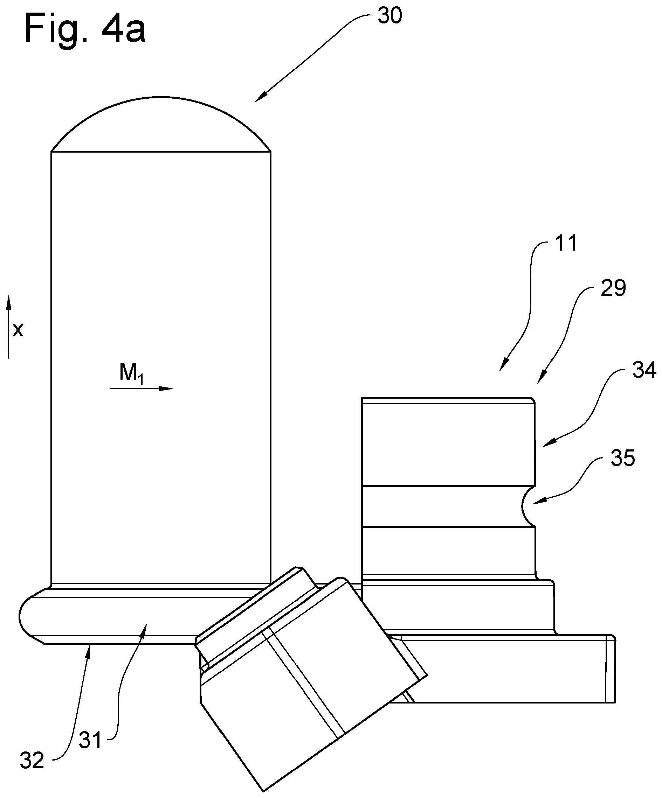

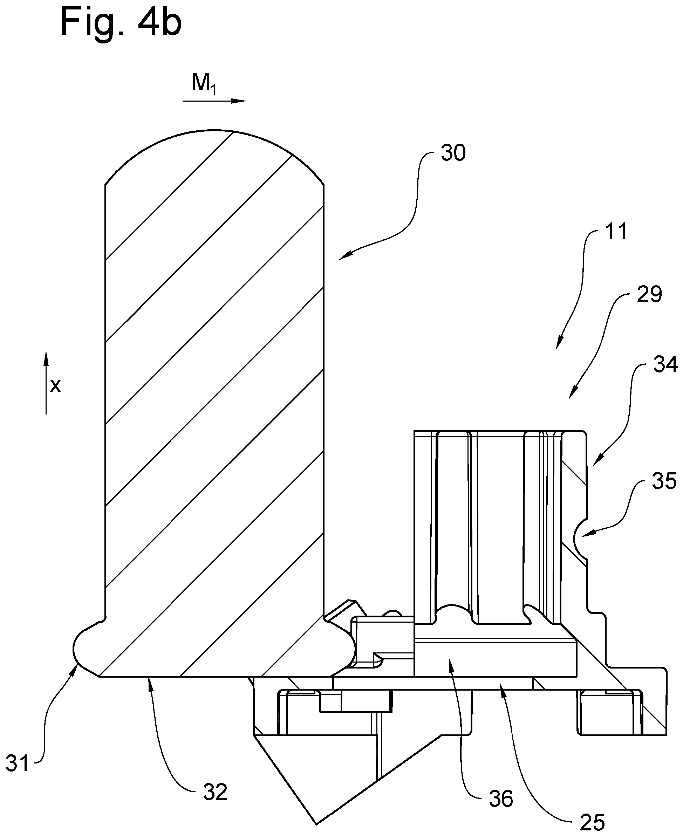

Figur 4a zeigt einerseits den Halter 11, andererseits den Lichtleitstab 30 in Seitenansicht und Vormontagestellung. Hierbei ist der Lichtleitstab 30 mit seiner Lichteintrittsfläche 32 auf Höhe der Oberseite der Deckwand 25 des Halters 11 positioniert und befindet sich neben der durch die Zylinderwand 34 nicht begrenzten Zylinderwandöffnung. Figur 4b zeigt den Sachverhalt gemäß Figur 4a in Schnittansicht. Dieser Schnittansicht ist zu entnehmen, dass der Flansch 31 des Lichtleitstabes 30 auf Höhe des Ringnutabschnitts 36 der Zylinderwand 34 angeordnet ist. Dargestellt ist über einen Pfeil darüber hinaus die Montagerichtung M1, entlang derer der Lichtleitstab 30 durch die Zylinderwandöffnung in das Fixierelement 29 eingeschoben wird. Dabei greift der Flansch 31 in den Ringnutabschnitt 36 ein. Auf diese Weise ist der Lichtleitstab 30 in Lichtaustrittsrichtung X formschlüssig in der Zylinderwand 34 des Fixierelementes 29 gehalten.

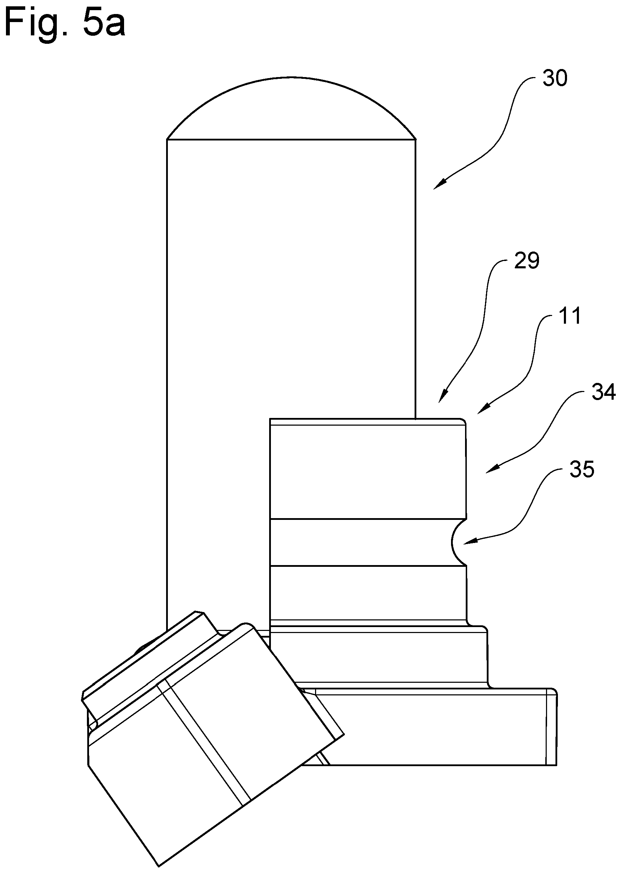

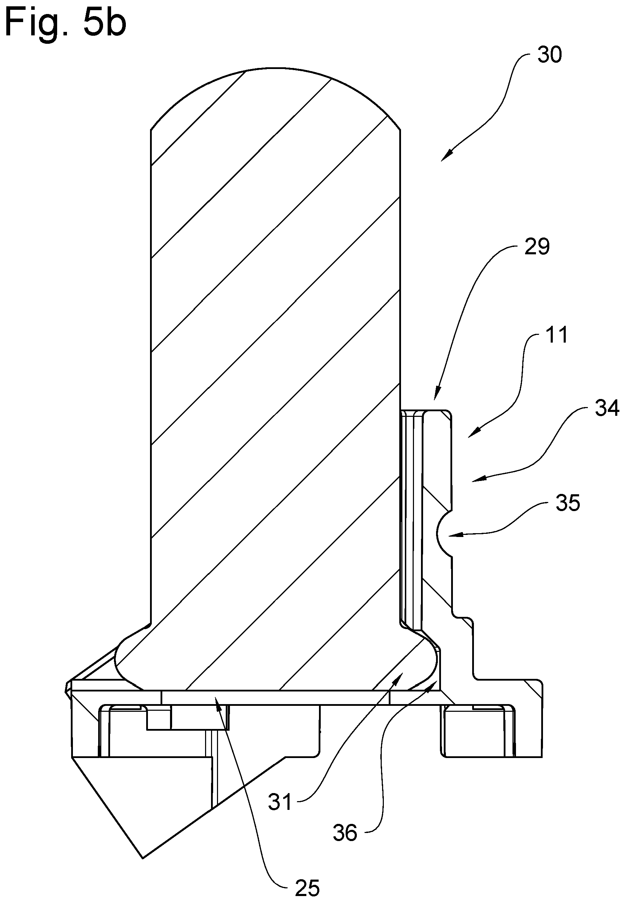

Die Montagestellung von Halter 11 und Lichtleitstab 30 in Seitenansicht ist in Figur 5a und in einer entsprechenden Schnittdarstellung in Figur 5b gezeigt. Man kann anhand der Figur 5a zunächst erkennen, dass die Zylinderwand 34 aufgrund ihres 180° Umfangswinkels den Lichtleitstab entlang seines hälftigen Umfangs umfängt. Figur 5b zeigt den Eingriff des Flansches 31 des Lichtleitstabes 30 in den Ringnutabschnitt 36 der Zylinderwand 34.

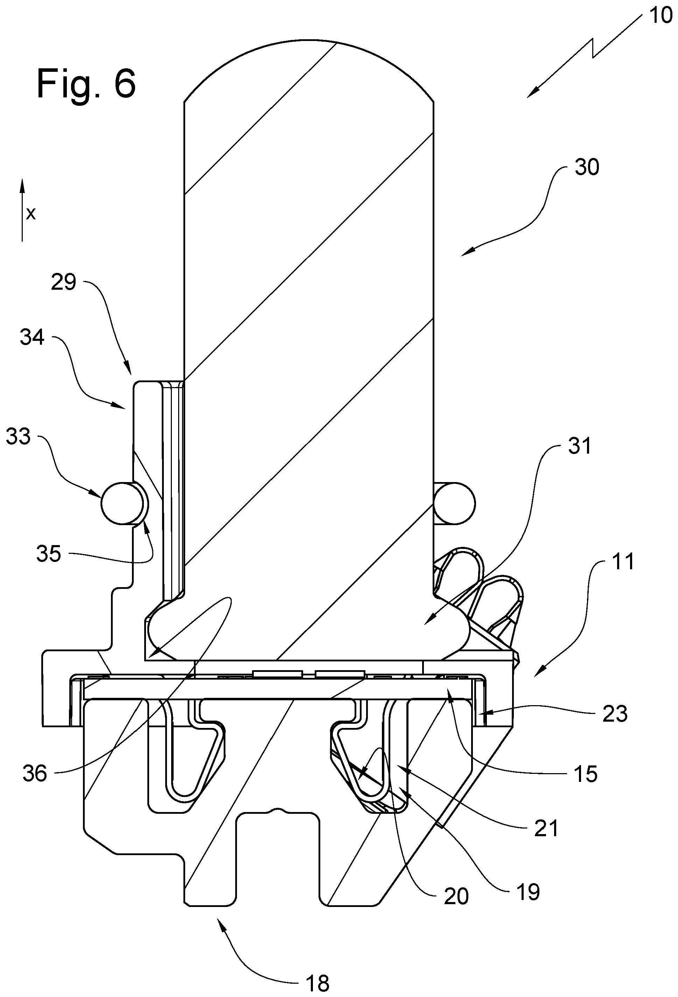

Figur 6 zeigt nunmehr eine seitliche Schnittansicht durch die komplette Leuchte 10. Hier ist zunächst zu entnehmen, wie die Leiterplatte 15 innerhalb der Leiterplattenaufnahme 23 des Halters 11 einsitzt und wie die Rastfederelemente 19 mit ihrem jeweiligen Fuß 20 in der Befestigungsnut 21 des als Kühlkörper ausgebildeten Gegenlagers 18 verankert sind. Der Lichtleitstab 30 sitzt entsprechend den Figuren 5a und 5b im Fixierelement 29 ein, wobei der Flansch 31 des Lichtleitstabes 30 in dem Ringnutabschnitt 36 der Zylinderwand 34 zur Einlage kommt.

Der Sicherungsring 33 ist entgegen der Lichtaustrittsrichtung X auf den Lichtleitstab 30 aufgeschoben und außenumfänglich um die Zylinderwand herumgelegt worden. Dabei sitzt der Sicherungsring 33 in der außenumfänglichen Sicherungsringnut 35 der Zylinderwand 34 ein.

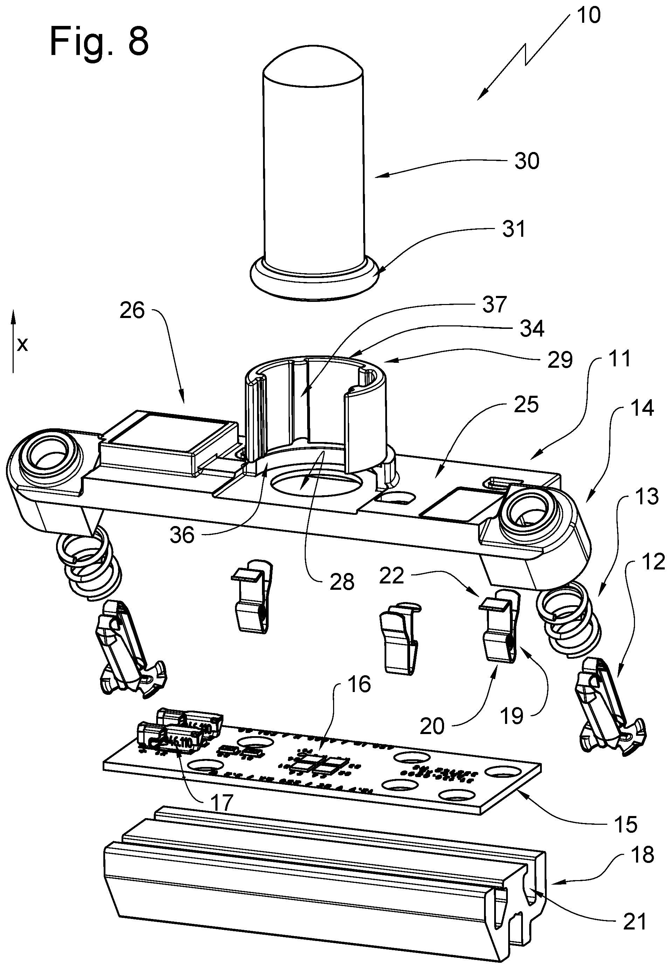

Figur 8 zeigt einen Querschnitt der Frontalansicht der Leuchte 10 nach erstem Ausführungsbeispiel, welche den gegen zu Figur 6 beschriebenen Sachverhalt in einer entsprechend abweichenden Ansicht zeigt. Diese Ansicht zeigt jedoch auch, wie die Anschlussklemmen 17 unterhalb der Aufnahmekuppel 26 des Halters 11 einsitzen.

In den Figuren 8 bis 12 ist ein Ausführungsbeispiel gezeigt, die in Aufbau und Struktur der ersten Ausführungsform große Übereinstimmung hat. Dies ist ohne weiteres an der Explosionsdarstellung in Figur 8 ersichtlich. Insoweit gilt für die zweite Ausführungsform zunächst die allgemeine Beschreibung, die insbesondere zu den Figuren 1 und 2 vorgenommen wurde.

Auch hier dient der Halter 11 als zentrales Bauteil, an welchem die Einzelteile der Leuchte 10 zusammengefasst werden. Von der Unterseite her wird die Leiterplatte 15 mit dem als Kühlkörper ausgebildeten Gegenlager 18 an den Halter 11 angesetzt. Der Halter 11 verfügt an seiner Oberseite über ein Fixierelement 29, welches sich in Lichtaustrittsrichtung erstreckt und ein im Wesentlichen hohlzylindrisches Bauteil mit einer Zylinderwand 34 ist, welche in einer Durchbrechung 28 in der Deckwand 25 des Halters 11 durchbricht. Die Durchbrechung 28 erlaubt es, von der LED 16 emittiertes Licht in einen Lichtleitstab 30 einzuspeisen.

Der Lichtleitstab 30 ist ebenfalls analog zum ersten Ausführungsbauteil hier als kreiszylindrischer Stab mit einem Umfangsflansch 31 ausgebildet, wobei - wie im Ausführungsbeispiel 1 beschrieben - hier auch Abweichungen im Querschnitt sowie Alternativstrukturen zum Flansch 31 möglich sind.

Auffällig ist, dass das Beispiel, wie in Figur 8 dargestellt, ohne Sicherungsring 33 auskommt und dass das Fixierelement 29 eine abweichende Ausgestaltung hat.

Auch bei dem Beispiel ist das Fixierelement 29 zunächst durch eine Zylinderwand 34 gebildet, die über einen Umfangswinkel von etwa 180° fest mit der Deckwand 25 des Halters 11 verbunden ist und an ihrem der Deckwand 25 nahen Ende einen Ringnutabschnitt 36 zur Aufnahme des Flansches 31 des Lichtleitstabes 30 ausbildet. Auch hier verfügt die Zylinderwand 34 über Zentrierstege 37.

Aus dem Umfangswinkel von 180° der Zylinderwand folgt, dass auch bei dieser Ausführungsform das Fixierelement einen sich in etwa ebenfalls über einem Umfangswinkel von 180° erstreckenden Umfangsfreischnitt bzw. über eine Umfangsöffnung verfügt. Die in Umfangsrichtung liegenden Enden der Zylinderwand 34 bilden jeweils einen Sicherungsflügel 38 aus. Dieser ist rückstellelastisch und ohne Anbindung an die Deckwand 25 ausgebildet. Jeder Sicherungsflügel 38 ist insofern gegenüber der Deckwand 25 radial beweglich. Die Sicherungsflügel 38 sind im Ausführungsbeispiel 2 materialeinheitlich-stoffschlüssig mit der Zylinderwand 34 ausgebildet und greifen in den Umfangsfreischnitt bzw. die Umfangsöffnung der Zylinderwand 34 ein. Auf diese Weise wird der Umfangsfreischnitt der Zylinderwand 34 verengt.

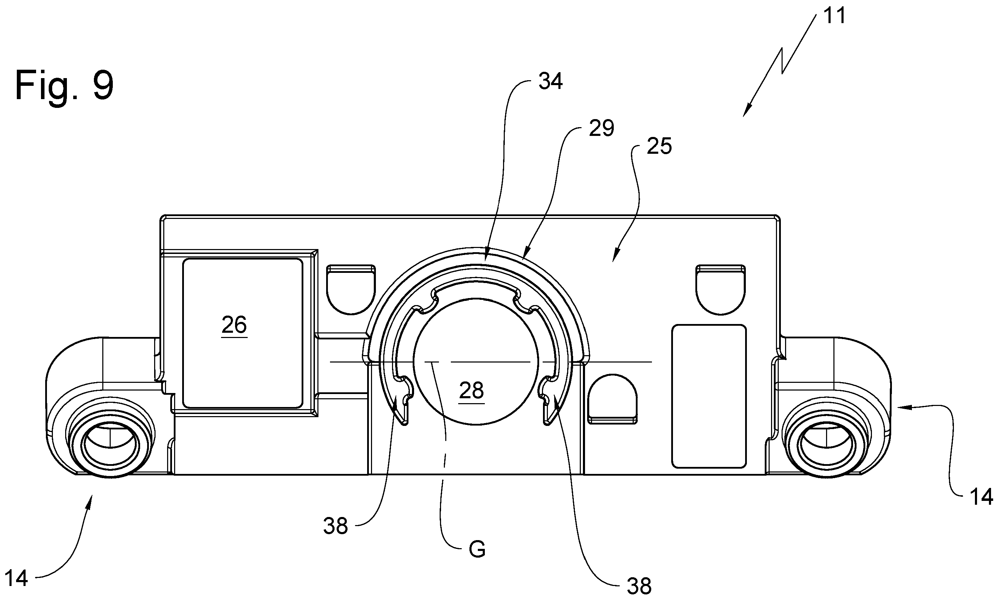

Dieser Sachverhalt ist noch einmal in der Ansicht von oben auf den Halter 11 nach Figur 9 dargestellt. Diese zeigt, wie die Zylinderwand 34 des Fixierelementes 29 die Durchbrechung 28 für den Lichtdurchtritt in einem Umfangswinkel von etwa 180° bis zur gestrichelt dargestellten Grenzlinie G umgibt, wobei jenseits der Grenzlinie die Umfangsöffnung bzw. der Umfangsfreischnitt der Zylinderwand 34 des Fixierelementes 29 liegt. Die Sicherungsflügel 38 schließen sich jeweils an die Zylinderwand 34 an und greifen in den Umfangsfreischnitt ein, so dass dieser verengt ist.

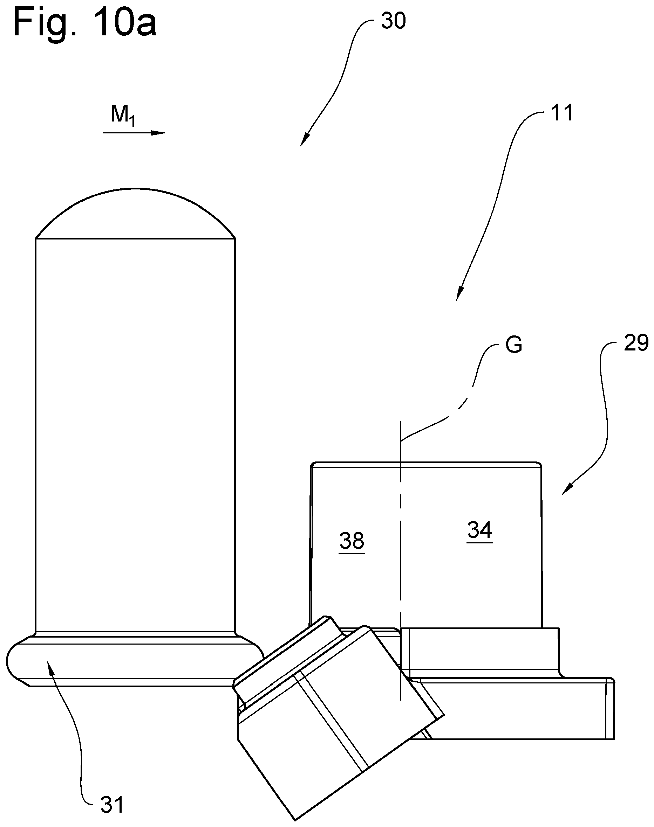

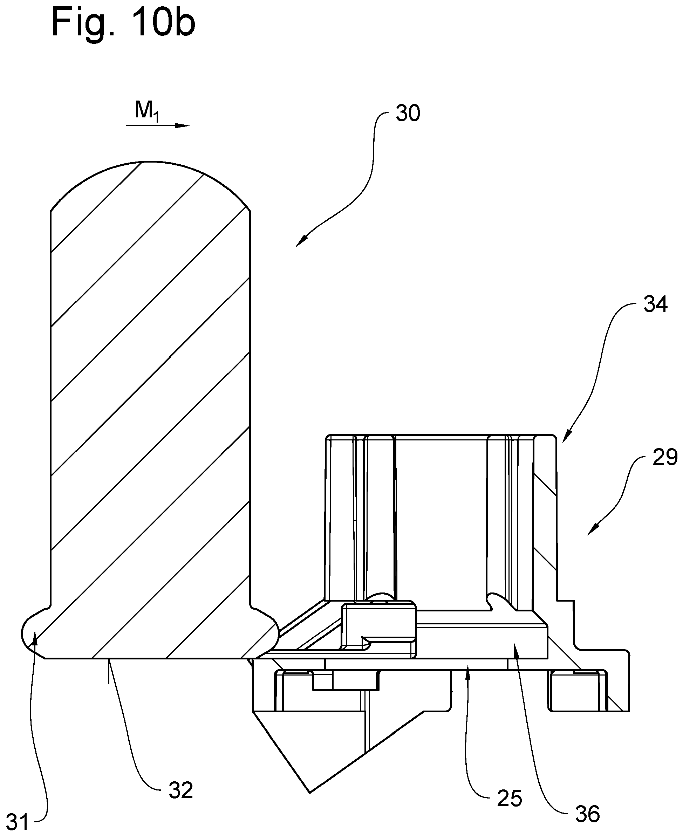

Die Figuren 10a und 10b zeigen den Halter 11 und den Lichtleitstab 30 in Vormontagestellung, wobei Figur 10b ein Vertikalschnitt nach Figur 10a ist. Wie auch beim ersten Ausführungsbeispiel, befindet sich in der Vormontagestellung die Lichteintrittsfläche 32 des Lichtleitstabes 30 auf Höhe der Oberfläche der Deckwand 25 seitlich der Umfangsöffnung der Zylinderwand 34 des Fixierelementes 29. Der Flansch 31 ist zum Ringnutabschnitt 36 ausgerichtet, so dass ein Einschieben des Lichtleitstabes 30 in Montagerichtung M1 zu einem Eintauchen des Flansches 30 in den Ringnutabschnitt 36 führt. Der Lichtleitstab 30 passiert hierbei den Umfangsfreischnitt bzw. die Umfangsöffnung der Zylinderwand 34, wobei die in Figur 10a dargestellten Sicherungsflügel 38 radial nach außen gespreizt werden.

Nach dem Durchtritt des Lichtleitstabes 30 durch den Umfangsfreischnitt der Zylinderwand 34 legen sich die Sicherungsflügel 38 aufgrund ihrer Rückstellelastizität an den Außenumfang des Lichtleitstabes 30 an und verengen somit die Umfangsöffnung. Hierdurch wird ein Herausrutschen des Lichtleitstabes 30 gegen die Montagerichtung M1 sicher verhindert.

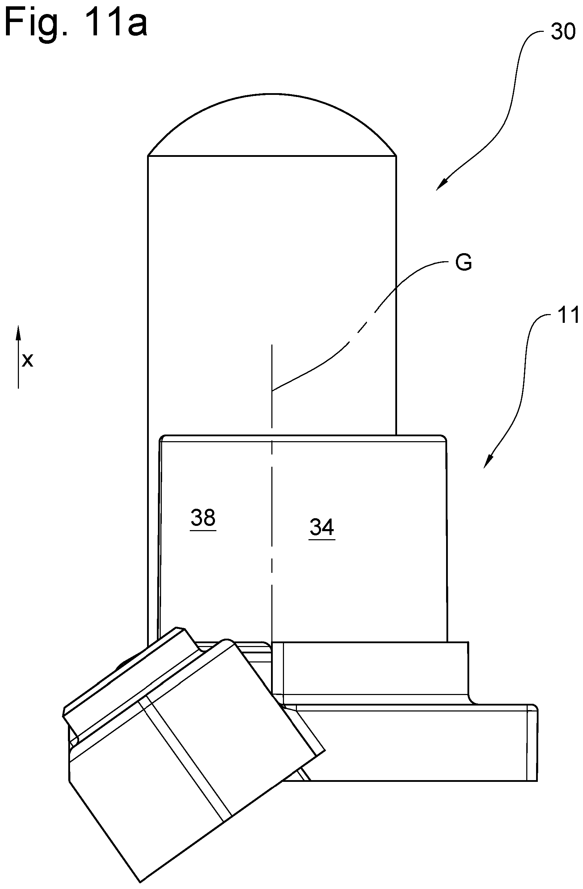

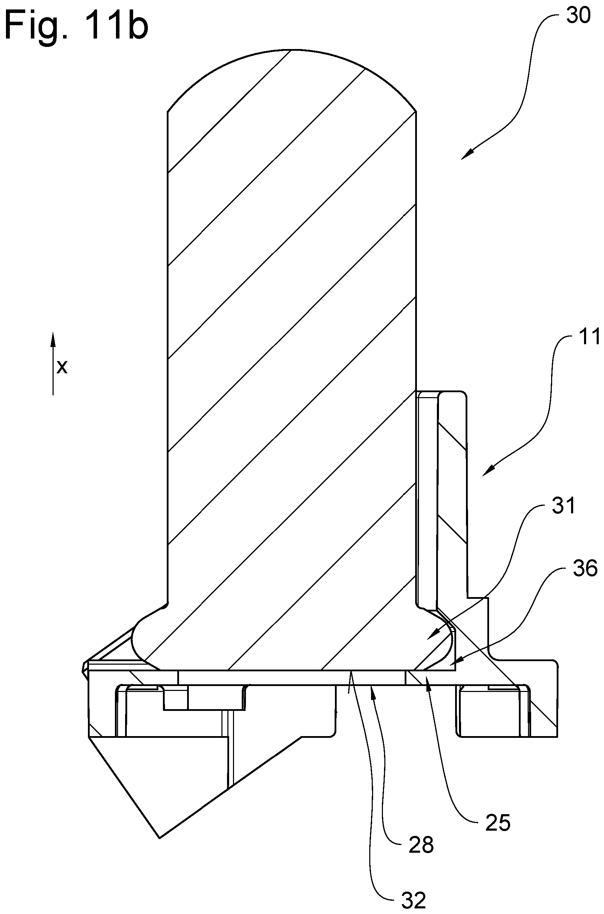

Die Montagelage von Halter 11 und Lichtleitstab 30 ist in den Figuren 11a und 11b dargestellt, wobei die Figur 11b einen Vertikalschnitt der Darstellung nach Figur 11a zeigt. Sichtbar ist, dass der Lichtleitstab 30 mit seiner Lichteintrittsfläche 32 oberhalb der Durchbrechung 28 der Deckwand 25 des Halters 11 angeordnet ist, so dass von der LED 16 (nicht dargestellt) emittiertes Licht in den Lichtleitstab 30 eingespeist werden kann.

Figur 11 zeigt darüber hinaus, wie der Flansch 31 des Lichtleitstabes 30 in den Ringabschnitt 36 eintaucht und dort gegen ein Herausrutschen in Lichtaustrittsrichtung X gesichert ist.

Figur 11a zeigt hingegen die Seitenansicht auf den im Halter 11 montierten Lichtleitstab 30. Hier erkennt man, dass die Zylinderwand 34 den Lichtleitstab 30 über einen Umfangswinkel von etwa 180° umgibt und der Lichtleitstab 30 im Übrigen im Bereich des Umfangsfreischnittes durch den anliegenden Sicherungsflügel 38 im Fixierelement 29 gehalten ist.

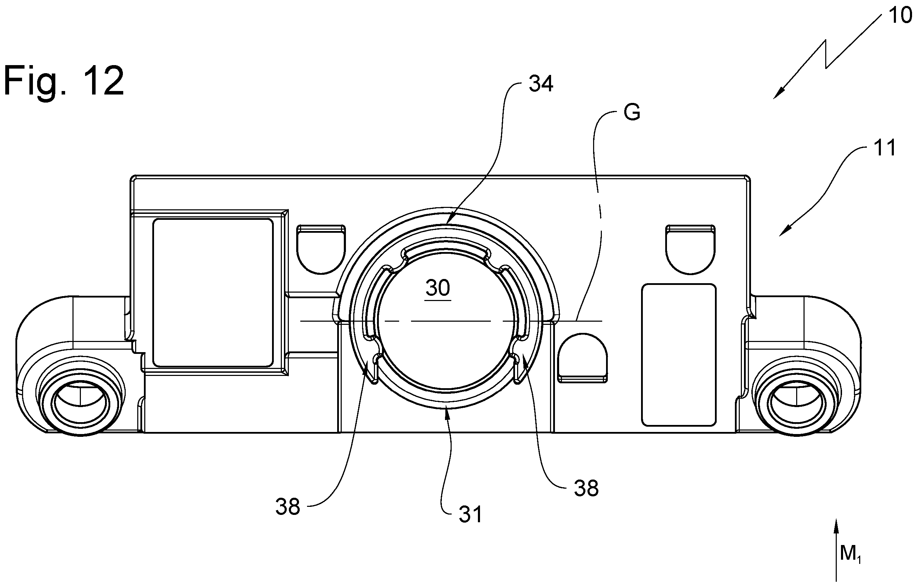

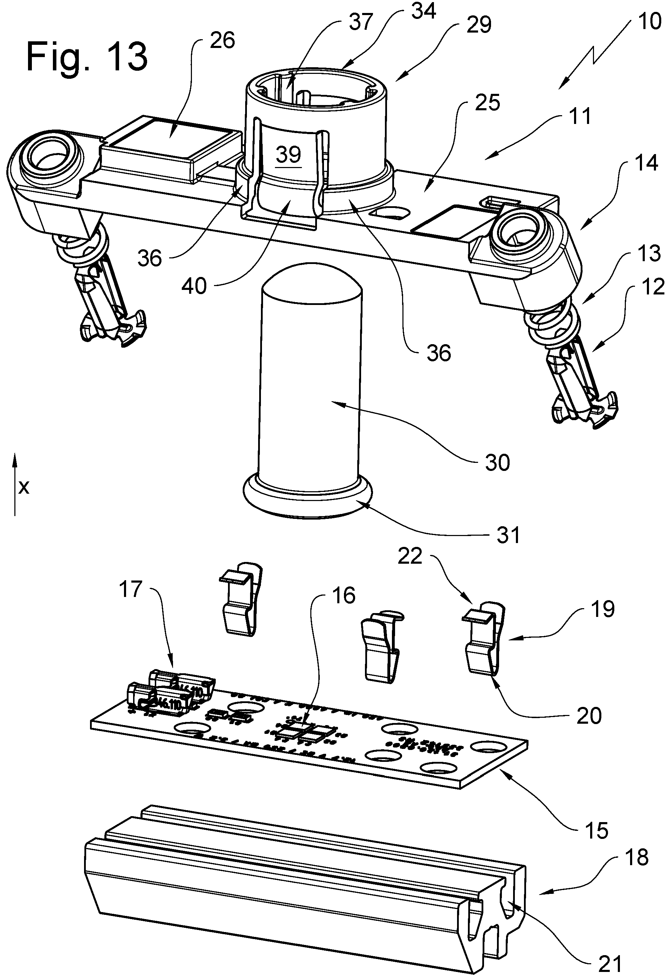

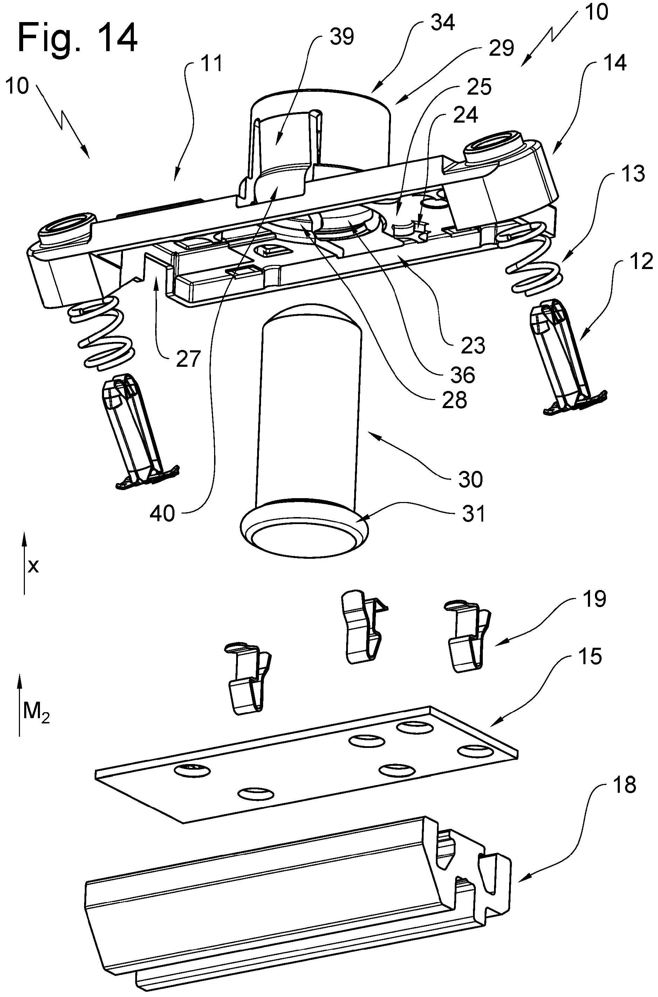

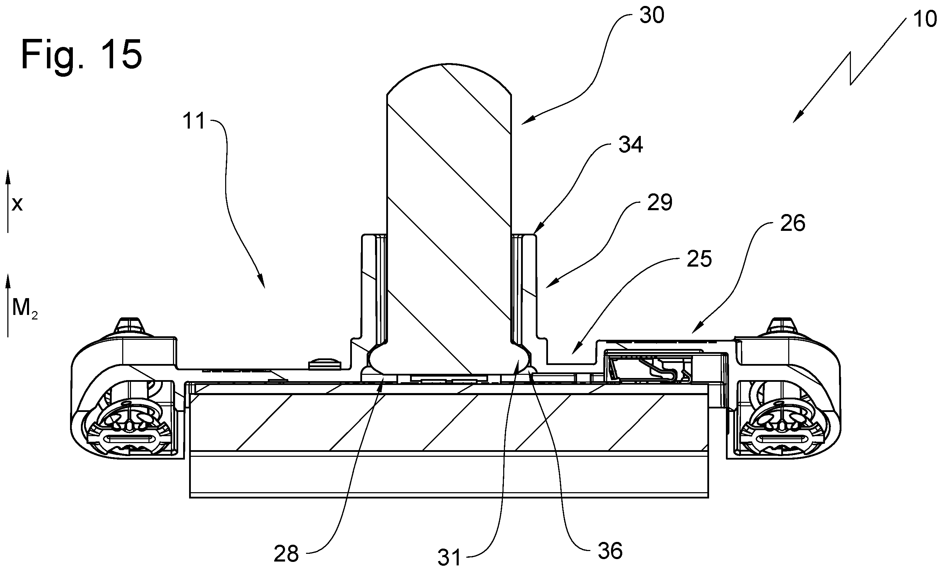

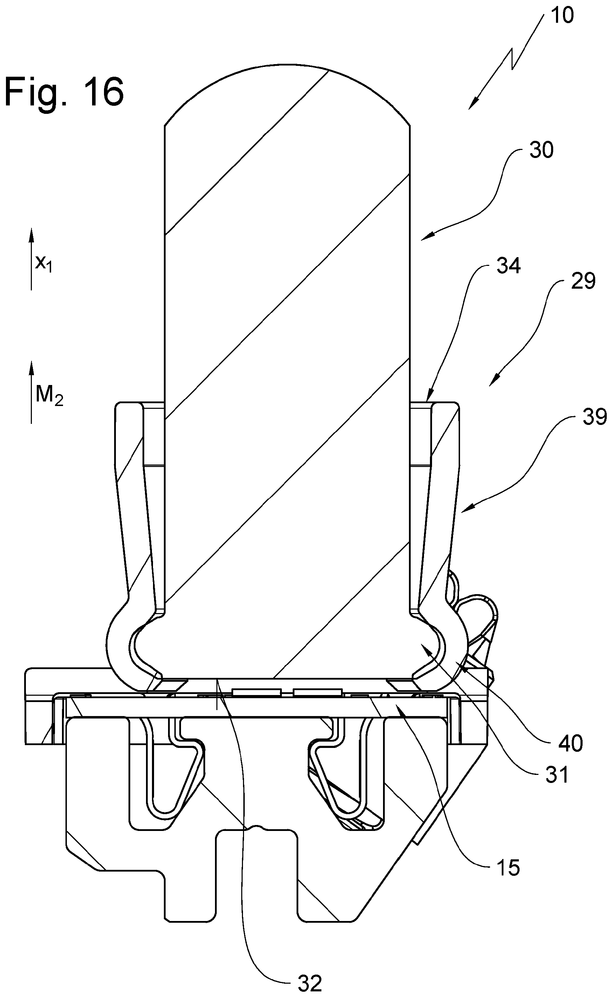

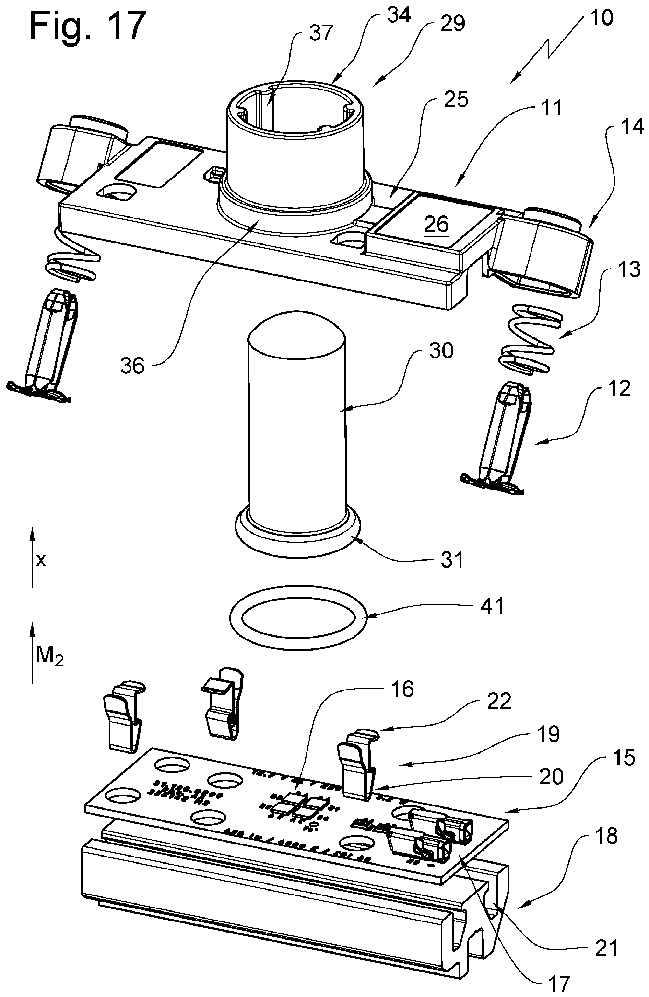

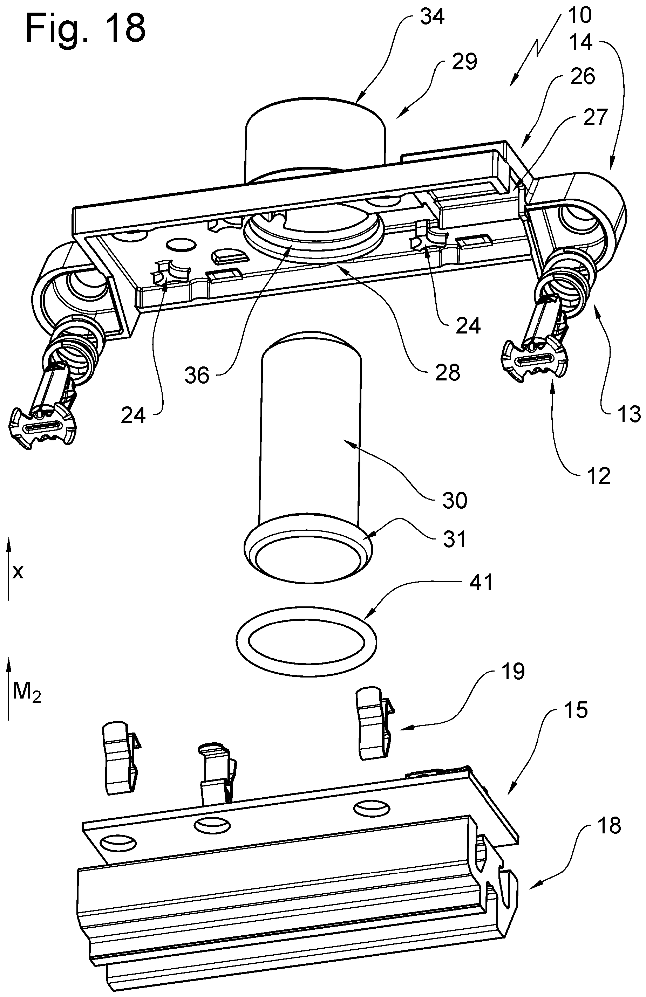

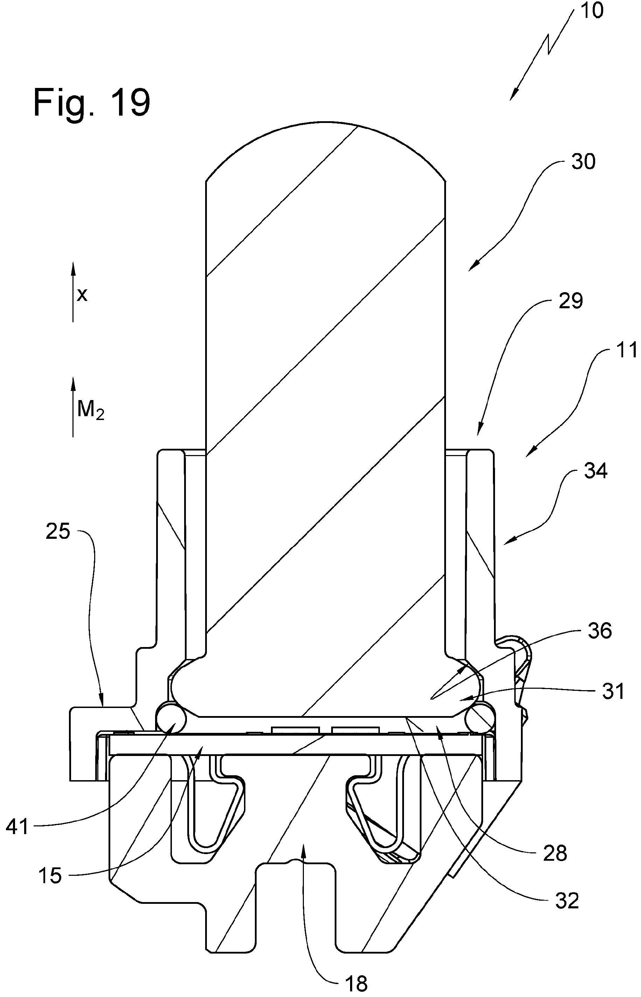

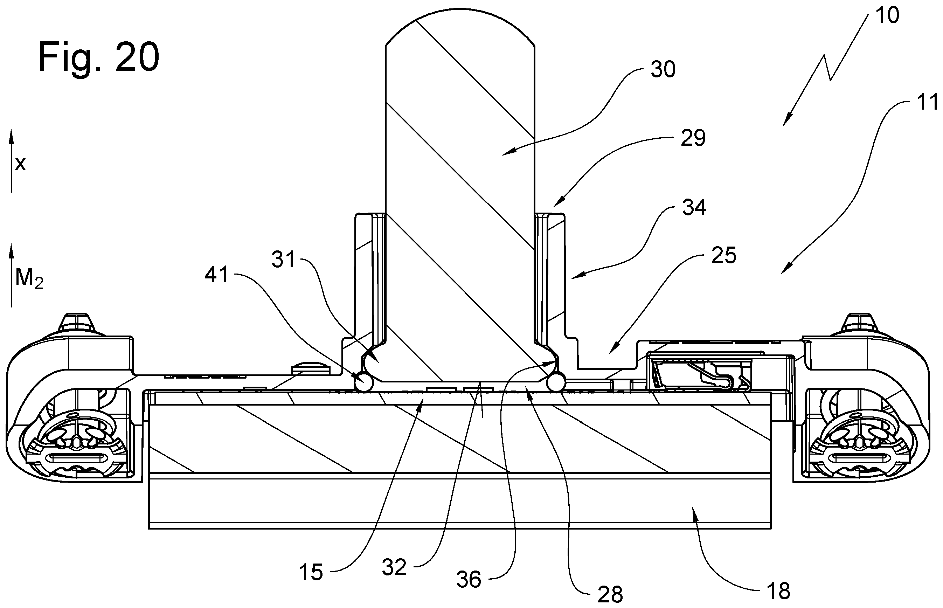

In diesem Zusammenhang wird auch noch einmal auf die Figur 12 verwiesen, welche eine Ansicht von oben auf die Leuchte 10 darstellt. Hier ist der Lichtleitstab 30 in Halter 11 eingesetzt. Anhand der eingezeichneten Grenzlinie G ist die Trennung zwischen Zylinderwand 34 und den Sicherungsflügeln 38 gut erkennbar. Sichtbar ist hier auch, wie die Sicherungsflügel 38 am Außenumfang des Lichtleitstabes 30 anliegen und diesen in Umfangsöffnung der Zylinderwand 34 verengend im Halter 11 gegen ein Herausrutschen entgegen der Montagerichtung M₁ sichern.

Die vorbeschriebenen Ausführungsform und Beispiel zeichnen sich unter anderem dadurch aus, dass der Lichtleitstab 30 quer zur Lichtaustrittsrichtung X über eine Umfangsöffnung der Zylinderwand 34 in das Fixierelement 29 eingesetzt wird.

Die nun im Folgenden beschriebenen Ausführungsformen 3 und 4 haben miteinander gemein, dass der Lichtleitstab 30 von der der Leiterplatte 15 zugewandten Unterseite des Halters 11 in Lichtaustrittsrichtung X durch die Durchbrechung 28 eingeschoben und in das Fixierelement 29 eingesetzt wird.

Zusammenfassend stellt die Erfindung eine neuartige Leuchte 10, insbesondere für Haushaltsgeräte, vornehmlich für Gargeräte, vor. Diese gewährleistet einen formschlüssigen und somit sehr sicheren Sitz des Lichtleitstabes 30. Dieser Formschluss wird abstrakt gesprochen durch einen Umfangsvorsprung des Lichtleitstabes 30 erreicht, wobei der Umfangsvorsprung in einer entsprechenden Ausnehmung des Halters 11 bzw. des Fixierelementes 29 des Halters 11 einsitzt. Besonders bevorzugt ist es, wenn der Umfangsvorsprung als Flansch 31 ausgebildet ist und dieser Flansch 31 sich an demjenigen Ende des Lichtleitstabes 30 befindet, welches die Lichteintrittsfläche 32 ausbildet.

Anzumerken ist noch, dass die Möglichkeit besteht, eine hinsichtlich der Axialrotation des Lichtleitstabes 30 definierte Ausrichtung des Lichtleitstabes 30 relativ zum Halter 11 zu gewährleisten. Hierzu lassen sich Freischnitte in den Flansch 31 einbringen, in welche in der Ringnut 36 bzw. den Ringnutabschnitten 36 befindliche Zapfen eingreifen. Hierdurch wird eine Rotation des Lichtleitstabes 30 um seine Längsachse herum sicher vermieden. Über die Anzahl der Freischnitte im Flansch 31 und ihre Lage ist es darüber hinaus möglich, bestimmte Lichtleitstäbe 30 für entsprechend ausgebildete Halter 11 zu kodieren, so dass bestimmten Haltern 11 definierte Lichtleitstäbe 30 zugeordnet werden können. Neben dem Verdrehschutz kann so auch eine Kodierfunktion erreicht werden.

Neben dem vorteilhaften Formschluss zur Festlegung des Lichtleitstabes 30 im Halter 11 gewährleistet der Umfangsvorsprung am Lichtleitstab 30, insbesondere der Flansch 31, den Lichtleitstab 30 in seinem vollen Querschnitt für die Lichtleitung zu nutzen. Lichtverluste durch Umfangseinschnitte im Lichtleitstab 30 werden somit sicher vermieden.

### BEZUGSZEICHENLISTE

- 10: Leuchte
- 11: Halter
- 12: Steckbolzen
- 13: Schraubenfeder
- 14: Bolzenaufnahme
- 15: Leiterplatte
- 16: LED
- 17: Anschlussklemme
- 18: Gegenlager
- 19: Rastfederelemente
- 20: Fuß
- 21: Befestigungsnut
- 22: Haltearm
- 23: Leiterplattenaufnahme
- 24: Distanzstück
- 25: Deckwand
- 26: Aufnahmekuppel
- 27: Leitereinführdurchbruch
- 28: Durchbrechung
- 29: Fixierelement
- 30: Lichtleitstab
- 31: Flansch
- 32: Lichteintrittsfläche
- 33: Sicherungsring
- 34: Zylinderwand
- 35: Sicherungsringnut
- 36: Ringnutabschnitt
- 37: Zentriersteg
- 38: Sicherungsflügel
- 39: Rastzunge
- 40: Rastlippen
- 41: Distanzring

- G: Grenzlinie
- X: Lichtaustrittsrichtung
- M₁: Montagerichtung
- M₂: Montagerichtung

## Patentansprüche

1. Gargeräteleuchte (10),
- mit einer Lichtquelle, die von einer Leiterplatte (15) mit darauf angeordneter LED (16) gebildet ist, welche Licht in Lichtaustrittsrichtung (X) emittiert,
- mit einem Lichtleitstab (30), der eine Lichteintrittsfläche (32) für das von der LED (16) emittierte Licht aufweist,
- mit einem Halter (11), der auf einer Unterseite eine Leiterplattenaufnahme (23) aufweist und auf einer der Unterseite gegenüberliegenden Oberseite mit einem Fixierelement (29) zur Aufnahme des Lichtleitstabes (30) versehen ist,
- mit einer Durchbrechung (28) des Halters (11) im Bereich des Fixierelementes (29), durch welche das emittierte Licht von der auf der Unterseite angeordneten LED (16) zum im oberseitig angeordneten Lichtleitstab (30) gelangt,
wobei
- der Lichtleitstab (30) in einer Radialebene einen materialeinheitlich-stoffschlüssigen Umfangsvorsprung aufweist,
- der Lichtleitstab (30) mittels des Umfangsvorsprungs im Fixierelement (29) des Halters (11) formschlüssig festgelegt ist,
- das Fixierelement (29) des Halters (11) ein hohlzylindrisches Bauteil mit einer Zylinderwand (34) ist, die in einer Radialebene eine innenumfängliche Ausnehmung aufweist, in welcher der Umfangsvorsprung des Lichtleitstabes (30) formschlüssig einsitzt, **dadurch gekennzeichnet dass**
- die Zylinderwand (34) des Fixierelements (29) einen längsaxialen Umfangsfreischnitt von wenigstens 180 Grad aufweist und der Lichtleitstab (30) quer zur Längsachse der Zylinderwand (34) in den Zylinderraum des Fixierelements (29) eingesetzt ist.

2. Gargeräteleuchte nach Anspruch 1, **dadurch gekennzeichnet, dass** der Umfangsvorsprung ein im Wesentlichen umlaufender Flansch (31) am an der Lichteintrittsfläche des Lichtleitstabes (30) gelegenen Ende des Lichtleitstabes (30) ist.

3. Gargeräteleuchte nach Anspruch 1, **dadurch gekennzeichnet, dass** das Fixierelement (29) eine wenigstens als Ringnutabschnitt (36) ausgebildete Ausnehmung aufweist.

4. Gargeräteleuchte nach Anspruch 2 und 3, **dadurch gekennzeichnet, dass** die innenumfängliche Ausnehmung, insbesondere in Form wenigstens eines Ringnutabschnittes (36) an dem dem Halter nahen Ende der Zylinderwand (34) ausgebildet ist.

5. Gargeräteleuchte nach einem der vorhergehenden Ansprüche, **dadurch gekennzeichnet, dass** ein Sicherungselement den Lichtleitstab (30) in der Zylinderwand (34) des Fixierelementes (29) hält.

6. Gargeräteleuchte nach Anspruch 1 und 5, **dadurch gekennzeichnet, dass** das Sicherungselement ein die Zylinderwand (34) des Fixierelementes (29) radial umfassender Sicherungsring (33), insbesondere ein Elastomerring ist, der bevorzugt in einer außenumfänglich in die Zylinderwand (34) eingearbeiteten Sicherungsringnut (35) einliegt.

7. Gargeräteleuchte nach Anspruch 1 und 5, **dadurch gekennzeichnet, dass** die Zylinderwand (34) wenigstens einen rückstellelastischen, in den Umfangsfreischnitt vorspringenden Sicherungsflügel (38) ausbildet, welcher als Sicherungselement den Umfangsfreischnitt in einer Radialebene verengt und außenumfänglich am Lichtleitstab (30) anliegt.

## Claims

1. Cooking appliance lamp (10),
- with a light source formed by a printed circuit board (15) with LEDs (16) arranged on it, which emit light in the light emission direction (X),
- with a light guide rod (30) that has a light entry surface (32) for the light emitted by the LED (16),
- with a holder (11) that has a circuit board receptacle (23) on its underside and, on its upper side opposite the underside, a fixing element (29) for receiving the light guide rod (30),
- with an opening (28) in the holder (11) in the area of the fixing element (29), through which the emitted light from the LED (16) arranged on the underside reaches the light guide rod (30) arranged on the upper side, light guide rod (30) located on the upper side, whereby
- the light guide rod (30) has a circumferential projection made of the same material and connected to the rod in a material-locking manner in a radial plane,
- the light guide rod (30) is fixed in a form-locking manner in the fixing element (29) of the holder (11) by means of the circumferential projection,
- the fixing element (29) of the holder (11) is a hollow cylindrical component with a cylinder wall (34) which has an inner circumferential recess in a radial plane, in which the circumferential projection of the light guide rod (30) is positively engaged,
**characterised in that**
the cylinder wall (34) of the fixing element (29) has a longitudinal axial peripheral free cut of at least 180 degrees and the light guide rod (30) is inserted transversely to the longitudinal axis of the cylinder wall (34) into the cylinder space of the fixing element (29).

2. Cooking appliance lamp according to claim 1, **characterised in that the** peripheral projection is a substantially circumferential flange (31) at the end of the light guide rod (30) located at the light entry surface of the light guide rod (30)

3. Cooking appliance lamp according to claim 1, **characterised in that the** fixing element (29) has a recess formed at least as a ring groove section (36).

4. Cooking appliance lamp according to claims 2 and 3, **characterised in that** the inner circumferential recess is formed, in particular in the form of at least one annular groove section (36), at the end of the cylinder wall (34) close to the holder.

5. Cooking appliance lamp according to one of the preceding claims, **characterised in that** a securing element holds the light guide rod (30) in the cylinder wall (34) of the fixing element (29).

6. Cooking appliance lamp according to claims 1 and 5, **characterised in that** the securing element is a retaining ring (33) radially surrounding the cylinder wall (34) of the fixing element (29), in particular an elastomer ring, which is preferably located in a retaining ring groove (35) incorporated in the outer circumference of the cylinder wall (34).

7. Cooking appliance lamp according to claims 1 and 5, **characterised in that** the cylinder wall (34) forms at least one resilient retaining wing (38) projecting into the peripheral cut-out, which, as a retaining element, narrows the peripheral cut-out in a radial plane and rests against the light guide rod (30) on its outer circumference.

## Revendications

1. Lampe pour appareil de cuisson (10),
- avec une source lumineuse formée par une carte de circuit imprimé (15) sur laquelle sont disposées des LED (16) qui émettent de la lumière dans la direction d'émission lumineuse (X),
- avec une tige de guidage de lumière (30) qui présente une surface d'entrée de lumière (32) pour la lumière émise par la LED (16),
- avec un support (11) qui comporte un logement pour carte de circuit imprimé (23) sur sa face inférieure et, sur sa face supérieure opposée à la face inférieure, un élément de fixation (29) pour recevoir la tige de guidage de lumière (30),
- avec une ouverture (28) dans le support (11) dans la zone de l' élément de fixation (29), à travers laquelle la lumière émise par la LED (16) disposée sur la face inférieure atteint la tige de guidage de lumière (30) disposée sur la face supérieure, tige de guidage de lumière (30) située sur la face supérieure, de sorte que
- la tige de guidage de lumière (30) présente une saillie circonférentielle réalisée dans le même matériau et reliée à la tige par verrouillage du matériau dans un plan radial,
- la tige de guidage de lumière (30) est fixée par verrouillage de forme dans l' élément de fixation (29) du support (11) au moyen de la saillie circonférentielle,
- l'élément de fixation (29) du support (11) est un composant cylindrique creux avec une paroi cylindrique (34) qui présente un évidement circonférentiel intérieur dans un plan radial, dans lequel la saillie circonférentielle de la tige de guidage de lumière (30) est engagée de manière positive,
**caractérisé en ce que**
la paroi cylindrique (34) de l'élément de fixation (29) présente une découpe périphérique axiale longitudinale libre d'au moins 180 degrés et la tige de guidage de lumière (30) est insérée transversalement à l'axe longitudinal de la paroi cylindrique (34) dans l'espace cylindrique de l'élément de fixation (29).

2. Lampe pour appareil de cuisson selon la revendication 1, **caractérisée en ce que**
l'saillie périphérique est une bride (31) s'étendant essentiellement sur tout le pourtour, située à l'extrémité de la tige conductrice de lumière (30) qui se trouve au niveau de la surface d'entrée de la lumière de la tige conductrice de lumière (30).

3. Lampe pour appareil de cuisson selon la revendication 1, **caractérisée en ce que**
l'élément de fixation (29) présente un évidement réalisé au moins sous la forme d'une section de rainure annulaire (36).

4. Lampe pour appareil de cuisson selon les revendications 2 et 3, **caractérisée en ce que**
l'évidement périphérique intérieur, en particulier sous la forme d'au moins une section de rainure annulaire (36), est formé à l'extrémité de la paroi cylindrique (34) proche du support.

5. Lampe pour appareil de cuisson selon l'une des revendications précédentes, **caractérisée en ce qu'**un élément de fixation maintient la tige conductrice de lumière (30) dans la paroi cylindrique (34) de l'élément de fixation (29).

6. Lampe pour appareil de cuisson selon les revendications 1 et 5, **caractérisé en ce que** l'élément de fixation est une bague de fixation (33) entourant radialement la paroi cylindrique (34) de l'élément de fixation (29), en particulier une bague en élastomère, qui est de préférence logée dans une rainure de bague de fixation (35) intégrée dans la paroi cylindrique (34) sur son pourtour extérieur.

7. Lampe pour appareil de cuisson selon les revendications 1 et 5, **caractérisé en ce que** la paroi cylindrique (34) forme au moins une ailette de sécurité (38) élastique en retour, faisant saillie dans la découpe périphérique, qui, en tant qu'élément de sécurité, rétrécit la découpe périphérique dans un plan radial et s'appuie sur le pourtour extérieur de la tige conductrice de lumière (30).
